# EUROPEAN PATENT SPECIFICATION

(11) **EP 4 174 139 B1**
(45) Date of publication and mention of the grant of the patent: **26.11.2025**
(21) Application number: 21829679.6
(22) Date of filing: 10.06.2021
(51) Int. Cl.: C09D 11/037, C09D 11/322, C09D 17/00, C09D 7/61, C09D 7/63, C09C 1/64

(54) **ALUMINUM SLURRY**
ALUMINIUMAUFSCHLÄMMUNG
PÂTE D'ALUMINIUM

(30) Priority: 25.06.2020 JP 2020109476
(43) Date of publication of application: 03.05.2023
(73) Proprietor: DIC Corporation, Tokyo 174-8520 (JP)
(72) Inventor: WATANABE Takanori, Sakura-shi, Chiba 285-8668 (JP)
(74) Representative: TBK
(86) International application number: PCT/JP2021/022018
(87) International publication number: WO 2021/261258

(56) References cited:
- WO-A1-2014/050893
- CN-A- 104 152 022
- CN-A- 107 629 490
- CN-A- 107 667 152
- JP-A- 2004 035 848
- JP-A- 2005 314 632
- JP-A- 2013 216 715
- JP-A- 2013 518 948
- US-A1- 2015 252 153
- US-A1- 2019 292 373
- US-B1- 6 287 695

## Description

### Technical Field

The present invention relates to a VMP (vacuum metallized pigment) aluminum slurry.

### Background Art

A VMP aluminum pigment is one type of small plate-shaped aluminum pigment with a thickness of the order of 5 to 50 nm. This is different from aluminum pigments having a thickness of the order of 100 to 600 nm manufactured by ball milling, and the surface of the VMP aluminum pigment is significantly smooth. Accordingly, printing with an ink containing a VMP aluminum pigment can produce a mirror surface-like silver color due to the smoothness of the surface and the thinness. On the other hand, in an ink using an aluminum pigment including a VMP, the adhesion between the aluminum pigment and a resin or base material in the ink is weak, and blocking and poor adhesion problems are caused during post-processing.
When an aluminum pigment is used in an ink as a method to solve this problem, an aluminum pigment having a surface coated with an acrylic resin or the like may be used for the purpose of improving the adhesion of the aluminum pigment with a resin or base material in the ink. However, in the case of a VMP aluminum pigment, since the influence of sputtering of the coated resin layer is enlarged, a problem of significantly degrading the mirror surface-like design is caused, and it is difficult to improve the adhesion by resin coating.
From the above situation, a VMP aluminum pigment showing excellent adhesion with a resin or base material used in an ink, while maintaining the mirror-surface-like design specific to the VMP, is being desired.

As another method for improving the adhesion of an aluminum pigment, a method of subjecting the aluminum pigment to a prescribed surface treatment has been proposed.

Japanese Unexamined Patent Application Publication No. JP H10-120936 A reports on an aluminum pigment composite containing 0.02 to 1.0 wt% of lower fatty acid having 1 to 5 carbon atoms, in which an acetone-soluble part included in the aluminum pigment is 1.0 wt% or less, and reports that in this new aluminum pigment composite, although the aluminum pigment used is that obtained using a ball mill, a coating film formation process by, for example, metallic coating or metallic printing provides a coating film having good aluminum pigment orientation, hardly causing metallic mottling, and having high metallic texture and also provides a coating film having excellent adhesion with a base material or protective clear layer after coating film formation. However, there is no example of application to a VMP aluminum pigment, and it cannot be said that the adhesion is sufficient for the increasing demand characteristics in recent years.

Japanese Unexamined Patent Application Publication No. JP H10-88026 A reports that although the metal surfaces of aluminum-based metallic pigments are exposed after pulverization operation of a metal film produced therefrom by physical vapor deposition, stability against corrosion of the metallic pigments is obtained by covering the metallic pigments, in particular, the pulverized surfaces thereof with a passivating protective layer. However, there is no mention of adhesion.

### Citation List

### Patent Literature

Further, US 2015/252153 A1 discloses a colored metallic pigment which contains a metallic pigment, a coloring pigment, a first compound and a second compound, wherein the coloring pigment adheres to the surface of the metallic pigment in the coexistence of the first compound and the second compound, the first compound is a compound having two or more carboxyl groups, and the second compound is a compound having one or more amino groups.

### Summary of Invention

### Technical Problem

The above-described technology is insufficient for satisfying metallic texture achieving high designability and current demand characteristics of adhesion level with a resin or base material in an ink.

### Solution to Problem

The present inventors have diligently studied to solve the above problems and, as a result, found that when a coating material formed using a VMP aluminum slurry containing a specific dicarboxylic acid is made into a coating film, the adhesion with a base material is particularly excellent, and the VMP aluminum slurry of the present invention has been completed.

That is, the present invention relates to a VMP aluminum slurry as defined in claim 1 and to a coating material, ink, or molded article as defined in claim 4. Further beneficial developments are set forth in dependent claims.
A VMP (vacuum metallized pigment) aluminum slurry of the present invention contains:
a dicarboxylic acid having an octanol/water partition coefficient (log Pow) of -1 to 1 and having a carbon chain of 2 to 5 carbon atoms between the two carboxy groups; and
a VMP aluminum pigment and a solvent, wherein the dicarboxylic acid described in (1) is at least one selected from adipic acid, pimelic acid, maleic acid, and succinic acid.
The amount of the dicarboxylic acid is preferably 1 to 12 parts based on 100 parts of the VMP aluminum pigment in terms of mass.
Component rates of the dicarboxylic acid, the VMP aluminum pigment, and the solvent in the VMP aluminum slurry are preferably 0.1% to 1.2%, 9.9% to 10.0%, and 88.9% to 89.9%, respectively, in terms of mass.

### Advantageous Effects of Invention

When a coating film is formed using the metallic pigment, the adhesion is improved to prevent so-called "cohesive peeling" and peeling between the ink layer and the base material are unlikely to occur, and it is possible to provide a VMP aluminum slurry with a low peeling property and a coating material, ink, and molded article formed using the VMP aluminum slurry.

Here, the "cohesive peeling" indicates peeling occurring in an ink layer not in the interface between a base material and an ink layer.

### Description of Embodiments

### <Dicarboxylic acid>

As the dicarboxylic acid used in a VMP aluminum slurry of the present embodiment, a dicarboxylic acid having an octanol/water partition coefficient (log Pow) of -1 to 1 and a carbon chain of 2 to 5 carbon atoms can be suitably used.

The octanol/water partition coefficient (log Pow) defined herein is a numerical value showing the incompatibility (hydrophobicity) of an object substance to water. Specifically, a larger log Pow indicates hydrophobicity, and a smaller log Pow indicates hydrophilicity (the log Pow can be a negative value). Here, when the log Pow is larger than 1, the affinity to an organic solvent is increased in an oil-based ink, and the amount of the dicarboxylic acid absorbed to the surface of the VMP aluminum pigment is decreased to degrade the adhesion. In contrast, when a dicarboxylic acid having a log Pow of smaller than -1 is treated, the VMP aluminum pigment aggregates in an oil-based ink due to its high hydrophilicity to decrease the adhesion. In addition, if the carbon chain is too short, since the VMP aluminum pigment and the dicarboxylic acid form a chelate, a hydrogen bond with a resin cannot be formed, and the adhesion is not improved.

In the present embodiment, adhesion is improved by treating a specific dicarboxylic acid. Since a dicarboxylic acid has two carboxy groups, one carboxy group forms a hydrogen bond with the surface of the VMP aluminum pigment, and the other carboxy group forms a hydrogen bond with a binder (for example, an NC resin or an acrylic resin). Consequently, the dicarboxylic acid plays a role of bonding the VMP aluminum pigment and the binder, and peeling between ink layers and peeling between an ink layer and a base material can be suppressed. In the present invention, the dicarboxylic acid is at least one selected from the group consisting of adipic acid, pimelic acid, maleic acid, and succinic acid. These dicarboxylic acids may be used alone or as a mixture of two or more thereof.

The dicarboxylic acid used in the present embodiment is contained in the VMP aluminum slurry in an amount of 0.1% to 1.2%, preferably 0.3% to 1.0%, in terms of mass.

### <VMP aluminum pigment>

A VMP pigment refers to a vacuum metallized pigment, and in the present embodiment, an aluminum pigment is used. The VMP aluminum pigment is produced by a depositing a thin (10 to 50 nm) aluminum metal layer on a soluble polymer peeling layer sprayed on an insoluble base material. The VMP aluminum pigment is manufactured by dissolving the peeling layer in a solvent to isolate the thin aluminum film and pulverizing the resulting aluminum film to a specific diameter distribution. The surface of the VMP aluminum pigment is significantly smooth and is therefore typically used for causing a so-called mirror effect or chromium effect when printed.

The VMP aluminum pigment has a distribution of particles with different sizes. In this case, the VMP aluminum pigment has a particle size distribution of particles with different thicknesses and diameters. The thickness means the smaller dimension of two dimensions in directions perpendicular to the largest dimension of a flake. The particle diameter means the largest dimension of a VMP aluminum pigment flake. Various values of the thickness h of a VMP aluminum pigment can be acceptable, and the median thickness h50 may range from 1 to 150 nm or from about 5 to 50 nm. In addition, the VMP aluminum pigment has a medium diameter d50 within a range of about 1 to 500 µm, or about 1 to 100 µm, or about 1 to 20 µm.

In an embodiment of the present invention, the VMP aluminum pigment may have coating. When coating is present, an arbitrary type of coating for a VMP aluminum pigment known to those skilled in the art may be accepted. Actually, the coating may be organic or inorganic. Furthermore, the coating may be a mixture of inorganic and organic components. The coating may be a single layer or multiple layers.

When the coating is an organic substance, the coating may be a small molecule or a polymer. Examples of a proper type of the small molecular organic coating include, but not limited to, saturated fatty acid, monounsaturated fatty acid, highly unsaturated fatty acid, stearic acid, oleic acid, ricinoleic acid, myristic acid, arachidic acid, linoleic acid, lauric acid, palmitic acid, palmitoleic acid, elaidic acid, erucic acid, triphenyl phosphate, trioctyl phosphate, butyric acid phosphate, octylphosphonic acid, laurylphosphonic acid, octyl phosphite, octadecyl phosphite, octadecyl phosphonic acid, and mixtures thereof. Examples of other types of the small molecular organic coating include sulfates and sulfonates.

When the coating is a polymer, although those having arbitrary molecular weights can be used, an appropriate molecular weight is within a range of 1,000 g/mol to 1,000,000 g/mol. Examples of the proper type of the polymer coating include, but not limited to, poly(acrylic acid), poly(styrene), poly(ethylene), poly(propylene), poly(maleic anhydride), poly(methyl methacrylate), polymethacrylic acid, poly(dimethylsiloxane), poly(vinyl alcohol), poly(ethyl methacrylate), poly(isobutyl methacrylate), poly(methacrylate), poly(butyl methacrylate), poly(n-butyl methacrylate), and mixtures and random, block, or alternating copolymers thereof.

When the coating is an inorganic substance, a metal oxide is used. Examples of the metal oxide to be used for coating the VMP aluminum pigment include, but not limited to, silicon dioxide, titanium dioxide, zinc oxide, zirconium dioxide, tin oxide, cerium dioxide, vanadium(IV) oxide, manganese oxide, copper oxide, chromium oxide, iron oxide, aluminum oxide, tungsten oxide, and mixtures and alloys thereof. The coating may also include a hydrous oxide of arbitrary one of the above-mentioned oxides. The coating may be a doped oxide of arbitrary one of the above-mentioned oxides. The thickness of the metal oxide layer can vary, but it must allow partial transparency. In general, the thickness of the metal oxide layer is preferably within a range of about 20 to 350 nm.

The VMP aluminum pigment is suppled in the form of a dispersion to suppress aggregation, rather than the VMP aluminum pigment alone. It can be supplied as a paste or a slurry depending on the degree of pigment concentration. In the case of a paste, the content of the VMP aluminum pigment may be within a range of 35 to 95 mass% with respect to the total mass of the paste. In the case of a slurry, the content of the VMP aluminum pigment may be within a range of 1 to 35 mass%, preferably within a range of 5 to 15 mass%, with respect to the total mass of the slurry.

### <Solvent>

The content of the solvent used in the present embodiment is usually about 40 to 98.9 mass% with respect to the total mass of the VMP aluminum slurry. The solvent used in the present embodiment may be an ester solvent, an alcohol solvent, or a mixture blend of an ester solvent and an alcohol solvent. When the solvent is a blend of an ester solvent and an alcohol solvent, the weight rate of the ester solvent to the alcohol solvent is within a range of about 0.1% to 99.9%. The VMP aluminum slurry can include one or more types of ester solvents and/or one or more types of alcohol solvents, without limiting the technical scope.

Examples of the ester solvent include, but not particularly limited to, methyl acetate, ethyl acetate, n-propyl acetate, 1-propyl acetate, isopropyl acetate, n-butyl acetate, isobutyl acetate, sec-butyl acetate, tert-butyl acetate, ethyl butyrate, ethyl lactate, hexyl acetate, isoamyl acetate, methyl propionate, and mixtures and blends thereof.

Examples of the alcohol solvent include, but not particularly limited to, methanol, ethanol, n-propanol, 1-propanol, isopropanol, n-butanol, 1-butanol, 2-butanol, isobutanol, tert-butanol, benzyl alcohol, ethylene glycol, diethylene glycol, 2-ethyl hexanol, glycerol, methyl carbitol, 2-methyl-1-butanol, 3-methyl-2-butanol, 1,2-propanediol, 1,3-propanediol, propylene glycol, propylene glycol monomethyl ether, propylene glycol monomethyl ether acetate, propylene glycol mono-n-propyl ether, propylene glycol mono-n-butyl ether, propylene glycol mono-t-butyl ether, propylene glycol monophenyl ether, dipropylene glycol monomethyl ether, dipropylene glycol monomethyl ether acetate, dipropylene glycol dimethyl ether, dipropylene glycol mono-n-butyl ether, dipropylene glycol mono-t-butyl ether, dipropylene glycol mono-n-propyl ether, tripropylene glycol monomethyl ether, tripropylene glycol mono-n-propyl ether, tripropylene glycol mono-n-butyl ether, and mixtures and blends thereof.

In addition to the ester solvent and/or alcohol solvent, another type of solvent may be further arbitrarily added to the VMP aluminum pigment. The additional solvent that can be used is, but not limited to, one or more selected from acetone, methyl ethyl ketone, tetrahydrofuran, diacetone alcohol, morpholine, isophorone, mesityl oxide, methyl isobutyl ketone, pentane, hexane, cyclohexane, heptane, octane, nonane, decane, kerosene, gasoline, mineral spirits, mineral oil, toluene, xylene, 2-butanone, diethyl ether, diethylene glycol dimethyl ether, nitromethane, triethylamine, pyridine, and mixtures and blends thereof.

### <Dispersion additive>

In the VMP aluminum slurry of the present embodiment, a dispersion additive may be used for stably dispersing the VMP aluminum pigment and further imparting storage stability to the slurry. The dispersion additive may be used in an amount range of 1 to 50 mass%, 1 to 30 mass%, or 2 to 15 mass%, with respect to the total mass of the VMP aluminum pigment in the VMP aluminum slurry.

The dispersion additive has a molecular weight within a range from about 100 g/mol to about 5,000,000 g/mol. An arbitrary type of polymer having a molecular weight within this range may be used, and examples thereof include, but not limited to, poly(ethylene), poly(propylene), poly(butylene), poly(isobutylene), poly(isoprene), poly(acetal), poly(ethylene glycol), poly(propylene glycol), poly(butylene glycol), poly(methyl methacrylate), poly(dimethylsiloxane), poly(vinyl alcohol), poly(styrene), poly(maleic anhydride), poly(ethyl methacrylate), poly(isobutyl methacrylate), poly(methacrylate), poly(butyl methacrylate), poly(n-butyl methacrylate), poly(vinyl butylate), poly(vinyl chloride), polysiloxane, and mixtures and random, block, or alternating copolymers thereof.

In addition, as the dispersion additive, various fatty acids that are usually used in aluminum pigments may be used. Examples thereof include oleic acid and stearic acid.

The VMP aluminum slurry of the present invention may contain further another additive. Examples of the further another additive include, but not limited to, a co-dispersant, a co-solvent, an organic pigment, an inorganic pigment, a pearlescent pigment, a metallic pigment, an emulsifier, a thickener, a rheology modifier, a coalescing agent, a wax, a resin, a binder, a varnish, a filler, and other types of additives known to those skilled in the art.

The VMP aluminum slurry of the present invention may contain a binder. When a binder is contained, the binder is added within a range of 0.01% to 20% with respect to the total mass of the slurry. Examples of the type of the binder include, but not limited to, poly(ester), poly(urethane), poly(vinyl), poly(ethylene), poly(propylene), cellulose, poly(vinyl butylate), poly(maleic anhydride), poly(styrene), cellulose acetate, cellulose propionate acetate, cellulose acetate butyrate, poly(vinyl alcohol), poly(amide), nitrocellulose, acrylic, alkyd, fluororesin, and arbitrary mixtures and random, block, or alternating copolymers thereof.

In the present invention, the VMP aluminum pigment is contained in the VMP aluminum slurry in an amount of 1% to 35%, preferably 5% to 15%, in terms of mass.

The VMP aluminum slurry of an embodiment of the present invention can further enhance the adhesion between a base material and an ink layer and the adhesion in the ink layer when the component rates in terms of mass are:
dicarboxylic acid: 0.1% to 1.2%;
VMP aluminum pigment: 9.9% to 10.0%; and
solvent: 88.9% to 89.9%.

### <Coating material and ink>

The VMP aluminum slurry of an embodiment can be used as a coating material or an ink. One embodiment can provide a coating material or an ink containing the VMP aluminum pigment of the embodiment. Examples of the coating material include a powder coating material, a furniture coating material, an electrical appliance coating material, an automobile coating material, and a plastic coating material. Examples of the ink include a printing ink and a packaging material printing ink.

The coating material or the ink may contain the VMP aluminum slurry of an embodiment, a dispersion medium, and a resin for the coating material or the ink. As the dispersion medium, an arbitrary dispersion medium that is used for dispersion of pigments can be used, and a conventionally known dispersion medium may be used. Examples of the dispersion medium include alcohol-based solvents, such as ethyl alcohol, n-propyl alcohol, isopropyl alcohol, n-butyl alcohol, and isobutyl alcohol; ester-based solvents, such as ethyl acetate, propyl acetate, and butyl acetate; ketone-based solvents, such as methyl ethyl ketone, methyl butyl ketone, and cyclohexanone; ether ester-based solvents, such as methyl cellosolve acetate and butyl cellosolve acetate; amide-based solvents, such as dimethyl formamide and dimethyl acetamide; aromatic hydrocarbon-based solvents, such as toluene and xylene; aliphatic hydrocarbon solvents, such as hexane, heptane, and a white spirit; and mixed solvents of an aromatic hydrocarbon and an aliphatic hydrocarbon, such as mineral spirits.

As a resin for the coating material or the ink, an arbitrary resin that is mixed with a coating material or an ink can be used, and a conventionally known resin may be used. Examples of the resin include an acrylic resin, a polyester resin, an alkyd resin, a urethane resin, an epoxy resin, a vinyl chloride vinyl acetate copolymer resin, a polyamide resin, a melamine resin, a nitrocellulose resin, and a urethane resin.

As a pigment for the coating material or the ink, in addition to the VMP aluminum pigment, an arbitrary color pigment or bright material that does not falls under the VMP aluminum pigment of an embodiment but is mixed with a coating material or an ink can be further contained, and a conventionally known color pigment or bright material may be used. Examples of the color pigment include a phthalocyanine-based pigment, a halogenated phthalocyanine-based pigment, a quinacridone-based pigment, a diketopyrrolopyrrole-based pigment, an isoindolinone-based pigment, an azo-based pigment, an azomethine metal complex-based pigment, an indanthrone-based pigment, a perylene-based pigment, a perinone-based pigment, an anthraquinone-based pigment, a dioxazine-based pigment, a benzimidazolone-based pigment, a condensed azo-based pigment, a triphenylmethane-based pigment, a quinophthalone-based pigment, an anthrapyrimidine-based pigment, titanium oxide, iron oxide, carbon black, and bismuth vanadate. Examples of the bright material include an aluminum pigment coated with a metal or a metal oxide, a mica pigment, an alumina pigment, and a glass flake pigment.

For example, the coating material or the ink contains preferably 0.5 to 50 mass%, more preferably 1 to 40 mass%, and further preferably 3 to 30 mass% of the VMP aluminum pigment.

The coating material or the ink may contain, in addition to the VMP aluminum slurry of an embodiment, various additives, such as an aging inhibitor, an antiseptic agent, a softener, an UV absorber, an antioxidant, a light stabilizer, a heat stabilizer, and an antistatic agent, as needed.

Examples of a molded article formed by the VMP aluminum slurry according to an embodiment include various molded articles applied and decorated with a coating material or an ink formed from the VMP aluminum slurry according to an embodiment, such as a packaging container, various plastic coated articles, and an automobile part. Examples of another form include molded articles internally added with the VMP aluminum pigment according to an embodiment, such as an electrical equipment housing, an automobile part, a plastic container, and cosmetics including makeup such as mail polish and eye shadow and base makeup such as foundation.

As an example, the VMP aluminum pigment is usually provided as a slurry in ethyl acetate, and is used as a coloring agent for ink, coating, and specific cosmetic use, for example, nail polish.

### EXAMPLES

The present invention will now be described in more detail with reference to examples, but is not limited to these examples. Incidentally, "part(s)" and "%" are based on mass unless otherwise specified.

### (EXAMPLE 1)

SPLENDAL 6003 (BENDA-LUTZ Corporation, average particle diameter: 12 µm, metal content: 10.0 mass%, 30 g) and adipic acid (carbon chain: 4, log Pow: 0.13, 0.09 g) were added to a 70-mL glass bottle and were stirred at 40°C for 2 hours to obtain a VMP aluminum slurry (X-1) treated with adipic acid.

### (EXAMPLE 2)

A VMP aluminum slurry (X-2) treated with adipic acid was obtained as in EXAMPLE 1 except that 0.09 g of adipic acid in EXAMPLE 1 was changed to 0.15 g.

### (EXAMPLE 3)

A VMP aluminum slurry (X-3) treated with adipic acid was obtained as in EXAMPLE 1 except that 0.09 g of adipic acid in EXAMPLE 1 was changed to 0.30 g.

### (EXAMPLE 4)

SPLENDAL 6003 (BENDA-LUTZ Corporation, average particle diameter: 12 µm, metal content: 10.0 mass%, 30 g) and pimelic acid (carbon chain: 5, log Pow: 0.51, 0.0 9g) were added to a 70-mL glass bottle and were stirred at 40°C for 2 hours to obtain a VMP aluminum slurry (X-4) treated with pimelic acid.

### (EXAMPLE 5)

A VMP aluminum slurry (X-5) treated with pimelic acid was obtained as in EXAMPLE 4 except that 0.09 g of pimelic acid in EXAMPLE 4 was changed to 0.15 g.

### (EXAMPLE 6)

A VMP aluminum slurry (X-6) treated with pimelic acid was obtained as in EXAMPLE 4 except that 0.09 g of pimelic acid in EXAMPLE 4 was changed to 0.30 g.

### (EXAMPLE 7)

SPLENDAL 6003 (BENDA-LUTZ Corporation, average particle diameter: 12 µm, metal content: 10.0 mass%, 30 g) and maleic acid (carbon chain: 2, log Pow: 0.21, 0.09 g) were added to a 70-mL glass bottle and were stirred at 40°C for 2 hours to obtain a VMP aluminum slurry (X-7) treated with maleic acid.

### (EXAMPLE 8)

A VMP aluminum slurry (X-8) treated with maleic acid was obtained as in EXAMPLE 7 except that 0.09 g of maleic acid in EXAMPLE 7 was changed to 0.15 g.

### (EXAMPLE 9)

A VMP aluminum slurry (X-9) treated with maleic acid was obtained as in EXAMPLE 7 except that 0.09 g of maleic acid in EXAMPLE 7 was changed to 0.30 g.

### (EXAMPLE 10)

SPLENDAL 6003 (BENDA-LUTZ Corporation, average particle diameter: 12 µm, metal content: 10.0 mass%, 30 g), adipic acid (0.03 g), and pimelic acid (0.03 g) were added to a 70-mL glass bottle and were stirred at 40°C for 2 hours to obtain a VMP aluminum slurry (X-10) treated with a plurality of dicarboxylic acids.

### (EXAMPLE 11)

SPLENDAL 6003 (BENDA-LUTZ Corporation, average particle diameter: 12 µm, metal content: 10.0 mass%, 30 g), adipic acid (0.03 g), pimelic acid (0.03 g), and maleic acid (0.03 g) were added to a 70-mL glass bottle and were stirred at 40°C for 2 hours to obtain a VMP aluminum slurry (X-11) treated with a plurality of dicarboxylic acids.

### (EXAMPLE 12)

SPLENDAL 6001 (BENDA-LUTZ Corporation, average particle diameter: 12 µm, metal content: 10.0 mass%, 30 g) and succinic acid (carbon chain: 2, log Pow: -0.53, 0.15 g) were added to a 70-mL glass bottle and were stirred at 40°C for 2 hours to obtain a VMP aluminum slurry (X-12) treated with succinic acid.

### [COMPARATIVE EXAMPLE 1]

SPLENDAL 6003 (BENDA-LUTZ Corporation, average particle diameter: 12 µm, metal content: 10.0 mass%, X-13) was evaluated.

### [COMPARATIVE EXAMPLE 2]

SPLENDAL 6003 (BENDA-LUTZ Corporation, average particle diameter: 12 µm, metal content: 10.0 mass%, 30 g) and acrylic acid (0.15 g) were added to a 70-mL glass bottle and were stirred at 40°C for 2 hours to obtain a VMP aluminum slurry (X-14) treated with acrylic acid.

### [COMPARATIVE EXAMPLE 3]

A VMP aluminum slurry (X-15) treated with sorbic acid was obtained as in COMPARATIVE EXAMPLE 2 except that acrylic acid in COMPARATIVE EXAMPLE 2 was changed to sorbic acid.

### [COMPARATIVE EXAMPLE 4]

A VMP aluminum slurry (X-16) treated with caprylic acid was obtained as in COMPARATIVE EXAMPLE 2 except that acrylic acid in COMPARATIVE EXAMPLE 2 was changed to caprylic acid.

### [COMPARATIVE EXAMPLE 5]

The same procedure as in COMPARATIVE EXAMPLE 2 was performed except that acrylic acid in COMPARATIVE EXAMPLE 2 was changed to fumaric acid, but the fumaric acid (carbon chain: 2, log Pow: 0.33) was not dissolved in the slurry solvent, and no VMP aluminum slurry treated with fumaric acid was obtained.

### [COMPARATIVE EXAMPLE 6]

A VMP aluminum slurry (X-17) treated with azelaic acid was obtained as in COMPARATIVE EXAMPLE 2 except that acrylic acid in COMPARATIVE EXAMPLE 2 was changed to azelaic acid (carbon chain: 7, log Pow: 1.4).

### [COMPARATIVE EXAMPLE 7]

A VMP aluminum slurry (X-18) treated with sebacic acid was obtained as in COMPARATIVE EXAMPLE 2 except that acrylic acid in COMPARATIVE EXAMPLE 2 was changed to sebacic acid (carbon chain: 8, log Pow: 2.2).

### [COMPARATIVE EXAMPLE 8]

SPLENDAL 6001 (BENDA-LUTZ Corporation, average particle diameter: 12 µm, metal content: 10.0 mass%, X-19) was evaluated.

### [COMPARATIVE EXAMPLE 9]

SPLENDAL 6001 (BENDA-LUTZ Corporation, average particle diameter: 12 µm, metal content: 10.0 mass%, 30 g) and azelaic acid (0.15 g) were added to a 70-mL glass bottle and were stirred at 40°C for 2 hours to obtain an aluminum slurry (X-20) treated with azelaic acid.

### [COMPARATIVE EXAMPLE 10]

A VMP aluminum slurry (X-21) treated with sebacic acid was obtained as in COMPARATIVE EXAMPLE 9 except that azelaic acid in COMPARATIVE EXAMPLE 9 was changed to sebacic acid (carbon chain: 8, log Pow: 2.2).

### (Methods for producing printing ink and printed matter)

A printing ink was produced by mixing 12.5 parts by mass of a dilution solvent (ethyl acetate : isopropyl alcohol = 60.0 parts by mass : 40.0 parts by mass) and 8.5 parts by mass of a nitrocellulose resin (Nobel NC Company Ltd.) with 12.5 parts by mass of an aluminum slurry (metal content: 10.0%). A printed matter was obtained by printing the produced ink on a shrink PET film (TOYOBO Co., Ltd.: SP809) with a bar coater #6 and drying it at 40°C to 50°C.

### (Evaluation of brightness)

The state of brightness of each printed matter obtained by the (Methods for producing printing ink and printed matter) above was visually evaluated on a five-grade scale.

### [Evaluation criteria]

5: Brightness is significantly high compared to COMPARATIVE EXAMPLE 1,
4: Brightness is high compared to COMPARATIVE EXAMPLE 1,
3: Comparable to COMPARATIVE EXAMPLE 1,
2: Brightness is low compared to COMPARATIVE EXAMPLE 1, and
1: Brightness is significantly low compared to COMPARATIVE EXAMPLE 1.

### (Evaluation of adhesion)

Cellophane tape was pasted to the printed surface of each printed matter obtained by the (Methods for producing printing ink and printed matter) above immediately and after being left in a constant temperature bath of 40°C after the drying, and the appearance of the printed film when the cellophane tape was rapidly peeled off from the printed surface in the vertical direction was visually evaluated on a five-grade scale.

### [Evaluation criteria]

5: Almost no ink was transferred to the tape side,
4: Partially transferred to the tape side,
3: Half transferred to the tape side,
2: More than half transferred to the tape side, and
1: Almost transferred to the tape side.

Table 1 shows the evaluation of brightness and the evaluation of adhesion (immediately after and one day after).

**[Table 1]**

| | | | Treatment conditions | | | Adhesion evaluation | |
|---|---|---|---|---|---|---|---|
| | VMP aluminum slurry | Metal content | Type of carboxylic acid | Treatment amount relative to metal content | Brightness | Immediately after | One day after |
| Example 1 | X-1 | 10.0% | Adipic acid | 3% | 3 | 2 | 4 |
| Example 2 | X-2 | 10.0% | | 5% | 3 | 3 | 5 |
| Example 3 | X-3 | 10.0% | | 10% | 3 | 2 | 5 |
| Example 4 | X-4 | 10.0% | Pimelic acid | 3% | 3 | 2 | 4 |
| Example 5 | X-5 | 10.0% | | 5% | 3 | 2 | 4 |
| Example 6 | X-6 | 10.0% | | 10% | 3 | 2 | 5 |
| Example 7 | X-7 | 10.0% | Maleic acid | 3% | 3 | 3 | 5 |
| Example 8 | X-8 | 10.0% | | 5% | 3 | 3 | 5 |
| Example 9 | X-9 | 10.0% | | 10% | 3 | 3 | 5 |
| Example 10 | X-10 | 10.0% | Adipic acid | 3% | 3 | 3 | 5 |
| | | | Pimelic acid | 3% | | | |
| Example 11 | X-11 | 10.0% | Adipic acid | 3% | 3 | 3 | 5 |
| | | | Pimelic acid | 3% | | | |
| | | | Maleic acid | 3% | | | |
| Example 12 | X-12 | 10.0% | Succinic acid | 5% | 3 | 4 | 4 |
| Comparative Example 1 | X-13 | 10.0% | None | 0% | 3 | 1 | 3 |
| Comparative Example 2 | X-14 | 10.0% | Acrylic acid | 5% | 3 | 1 | 2 |
| Comparative Example 3 | X-15 | 10.0% | Sorbic acid | 5% | 3 | 1 | 2 |
| Comparative Example 4 | X-16 | 10.0% | Caprylic acid | 5% | 3 | 1 | 2 |
| Comparative Example 6 | X-17 | 10.0% | Azelaic acid | 5% | 3 | 2 | 3 |
| Comparative Example 7 | X-18 | 10.0% | Sebacic acid | 5% | 3 | 1 | 2 |
| Comparative Example 8 | X-19 | 10.0% | None | 5% | 3 | 1 | 1 |
| Comparative Example 9 | X-20 | 10.0% | Azelaic acid | 5% | 3 | 1 | 1 |
| Comparative Example 10 | X-21 | 10.0% | Sebacic acid | 5% | 3 | 1 | 1 |

It is demonstrated that VMP aluminum slurries (X-1) to (X-12) are significantly improved in adhesion without degrading the brightness.

## Claims

1. A VMP aluminum slurry comprising:
a dicarboxylic acid having an octanol/water partition coefficient (log Pow) of -1 to 1 and having a carbon chain of 2 to 5 carbon atoms between two carboxy groups, wherein the dicarboxylic acid is at least one selected from adipic acid, pimelic acid, maleic acid, and succinic acid; and
a VMP (vacuum metallized pigment) aluminum pigment and a solvent.

2. The VMP aluminum slurry according to Claim 1, wherein an amount of the dicarboxylic acid is 1 to 12 parts based on 100 parts of the VMP aluminum pigment in terms of mass.

3. The VMP aluminum slurry according to Claim 1 or 2, wherein component rates of the dicarboxylic acid described in Claim 1, the VMP aluminum pigment, and the solvent in the VMP aluminum slurry are 0.1% to 1.2%, 9.9% to 10.0%, and 88.9% to 89.9%, respectively, in terms of mass.

4. A coating material, ink, or molded article formed using the VMP aluminum slurry according to any of Claims 1 to 3.

## Patentansprüche

1. VMP-Aluminiumschlämme, die umfasst:
eine Dicarbonsäure, die einen Octanol/Wasser-Verteilungskoeffizienten (log Pow) von -1 bis 1 aufweist und eine Kohlenstoffkette von 2 bis 5 Kohlenstoffatomen zwischen zwei Carboxygruppen hat, wobei die Dicarbonsäure mindestens eine aus Adipinsäure, Pimelinsäure, Maleinsäure und Bernsteinsäure ausgewählte ist; und
ein VMP (vakuummetallisiertes Pigment) Aluminiumpigment und ein Lösungsmittel.

2. VMP-Aluminiumschlämme gemäß Anspruch 1, wobei eine Menge der Dicarbonsäure 1 bis 12 Teile bezogen auf 100 Teile des VMP Aluminiumpigments, nach Masse, beträgt.

3. VMP-Aluminiumschlämme gemäß Anspruch 1 oder 2, wobei Bestandteilsanteile der in Anspruch 1 beschriebenen Dicarbonsäure, des VMP Aluminiumpigments bzw. des Lösungsmittels in der VMP-Aluminiumschlämme 0,1% bis 1,2%, 9,9% bis 10,0% bzw. 88,9% bis 89,9%, nach Masse, betragen.

4. Beschichtungsmaterial, Tinte oder Formkörper, das/der/die unter Verwendung der VMP-Aluminiumschlämme nach einem der Ansprüche 1 bis 3 gebildet ist.

## Revendications

1. Boue d'aluminium VMP comprenant :
un acide dicarboxylique ayant un coefficient de partage octanol/eau (log Pow) de -1 à 1 et ayant une chaîne carbonée de 2 à 5 atomes de carbone entre deux groupes carboxy, dans lequel l'acide dicarboxylique est au moins un acide choisi parmi l'acide adipique, l'acide pimélique, l'acide maléique et l'acide succinique ; et
un pigment d'aluminium VMP (pigment métallisé sous vide) et un solvant.

2. Boue d'aluminium VMP selon la revendication 1, dans laquelle la quantité d'acide dicarboxylique est comprise entre 1 et 12 parties sur la base de 100 parties de pigment d'aluminium VMP en termes de masse.

3. Boue d'aluminium VMP selon la revendication 1 ou 2, dans laquelle les proportions de l'acide dicarboxylique décrit dans la revendication 1, du pigment d'aluminium VMP et du solvant dans la boue d'aluminium VMP sont respectivement de 0,1 % à 1,2 %, de 9,9 % à 10,0 % et de 88,9 % à 89,9 % en termes de masse.

4. Matériau de revêtement, encre ou article moulé formé en utilisant la boue d'aluminium VMP selon l'une quelconque des revendications 1 à 3.
